# EUROPEAN PATENT SPECIFICATION

(11) **EP 2 290 793 B1**
(45) Date of publication and mention of the grant of the patent: **07.03.2018**
(21) Application number: 10008626.3
(22) Date of filing: 18.08.2010
(51) Int. Cl.: H02M 1/42, H02M 1/12

(54) **Converter device, module for driving motor, refrigerating apparatus, harmonic reducing device**
Wandlervorrichtung, Modul für Antriebsmotor, Kühlvorrichtung, Oberwellenreduzierungsvorrichtung
Dispositif convertisseur, module de commande de moteur, appareil réfrigérant et dispositif de réduction harmonique

(30) Priority: 31.08.2009 JP 2009199188
(43) Date of publication of application: 02.03.2011
(73) Proprietor: Hitachi Industrial Equipment Systems Co., Ltd., Tokyo (JP); Hitachi-Johnson Controls Air Conditioning, Inc., Tokyo 105-0022 (JP)
(72) Inventor: Li, Dong Sheng, Chiyoda-ku Tokyo 100-8220 (JP); Notohara, Yasuo, Chiyoda-ku Tokyo 100-8220 (JP)
(74) Representative: MERH-IP Matias Erny Reichl Hoffmann Patentanwälte PartG mbB

(56) References cited:
- JP-A- 2004 166 359
- JP-A- 2007 104 859
- US-A- 6 137 700
- US-A1- 2007 145 956
- DANIEL F ET AL: "Three-phase diode rectifier with low harmonic distortion to feed capacitive loads" APPLIED POWER ELECTRONICS CONFERENCE AND EXPOSITION, 1996. APEC '96. C ONFERENCE PROCEEDINGS 1996., ELEVENTH ANNUAL SAN JOSE, CA, USA 3-7 MARCH 1996, NEW YORK, NY, USA,IEEE, US LNKD- DOI:10.1109/APEC.1996.500550, vol. 2, 3 March 1996 (1996-03-03), pages 932-938, XP010159824 ISBN: 978-0-7803-3044-3

## Description

### BACKGROUND OF THE INVENTION

The present invention relates to a converting device for converting three-phase alternating current into direct current of the kind as referred to in the preamble portion of patent claim 1. Such a converting device is known from US-6 137 700 A.

An inverter apparatus intended for driving a three-phase AC motor is now prevailing in the industrial field such as a refrigerating device. When powered by a three-phase alternating current supply, this type of inverter apparatus is required to provide a rectifier circuit for converting three-phase alternating current into direct current. If a three-phase diode rectifier is used as the rectifier circuit, unfortunately, the diode rectifier brings about lots of source current harmonic components, which has such a strong adverse effect on the power system as bringing about a social problem. In recent days, the IEC (International Electrotechnical Commission) established the harmonic regulations (IEC61000-3-2 (Phase Current < 16A) and IEC61000-3-12 (16A < Phase Current < 75A)). Further, also in Europe, P.R. China and Japan, the harmonic regulations were established. In near future, therefore, these types of apparatuses will be required to provide some measures for reducing source current harmonics.

On the other hand, the use of a three-phase PWM (Pulse Width Modulation) converter composed of six semiconductor power elements makes it possible to reduce harmonics contained in current inputted thereto and to stabilize DC voltage outputted therefrom. To take this measure, however, it is necessary to have lots of semiconductor power elements and a sophisticated control unit, thereby making the overall apparatus very costly.

In consumer electronics and industrial apparatuses such as an air conditioner, a general-purpose inverter and a charging unit for an electric car, focus is often directed to their product costs. Hence, it is desirous to take an inexpensive harmonic measure.

As a conventional inexpensive harmonic measure for a three-phase converter device, as has been proposed in JP-2004-166359 A and JP-2007-104859 A, to reduce the input current harmonics, three AC reactors and three bidirectional switches are located on the input side of the three-phase rectifier so that those switches are energized only around a zero cross portion of each phase power voltage.

The technology disclosed in JP-2004-166359 A needs to provide three large AC reactors to satisfy the harmonic regulations. This thus makes the overall apparatus bulkier and more costly. In particular, since the thermal loss caused by the resistance of the AC reactor is proportional to a square of input current, when driven at high load, the reactor may be heated up and the overall apparatus may be made lower in efficiency.

The technology disclosed in JP-2007-104859 A needs to provide a voltage sensor or a transformer for the purpose of detecting the supply voltage and voltage phase. Further, to cause each element to be driven on and off, the driving circuit needs to have an insulated power supply of its own. This arrangement thus brings about practical problems such as the increase of the apparatus components in number and the degrade of the apparatus reliability.

US 6 137 700 A discloses a converter device for converting three-phase alternating current into direct current, comprising: a three-phase AC reactor configured to be connected with a three-phase AC power supply; a three-phase diode bridge connected to the three-phase AC reactor; a plurality of smoothing capacitors connected in series with each other across the DC side of the three-phase diode bridge, one of the capacitors being grounded at its minus terminal; three bidirectional switches connected between an AC side of the three-phase diode bridge and a midpoint of the smoothing capacitors connected in series with each other.

In addition, throughout the specification, the term "AC" means an abbreviation of alternating current and the term "DC" means an abbreviation of direct current.

### SUMMARY OF THE INVENTION

It is therefore an object of the present invention to provide a converter device for converting three-phase alternating current into direct current, which is arranged to satisfy the harmonic regulations.

This object is accomplished with a converter device as claimed in claim 1. Dependent claims are directed on features of preferred embodiments of the invention.

The present invention may offer an inexpensive converter device that is arranged to satisfy the harmonic regulations.

### BRIEF DESCRIPTION OF THE DRAWINGS

Fig. 1 is a circuit diagram showing a converter device according to an embodiment of the present invention;
Fig. 2 is a circuit diagram showing bidirectional switches and a driving circuit included in the converter device;
Fig. 3 is a functional block diagram showing a control unit of the converter device;
Fig. 4 shows power supply phases and detected voltage signal waveforms;
Fig. 5 shows power supply phases and detected voltage signal waveforms;
Fig. 6 is a functional block diagram showing a supply phase computing unit of the control unit included in the converter device;
Fig. 7 is a functional block diagram showing the supply phase computing unit of the control unit included in the converter device;
Fig. 8 is a chart showing a supply voltage and a modulated waveform of each phase;
Fig. 9 is a chart showing a supply voltage, a U-phase modulated wave, a carrier wave, a U-phase PWM control signal, and a source current;
Fig. 10 is a functional block diagram showing a modulated wave regulator of the control unit;
Fig. 11 is a waveform chart showing a supply voltage, a voltage to be applied to a U-phase bidirectional switch, a current to be applied to the U-phase bidirectional switch, and a U-phase source current;
Fig. 12 is a chart showing a simulated waveform appearing when the converter device is started;
Figs. 13A and 13B show simulated current and voltage waveforms and analysis of current harmonics appearing when the converter device is driven at rated load;
Figs. 14A and 14B show simulated current and voltage waveforms and analysis of current harmonics appearing when the converter device is driven at light load;
Fig. 15 is a block diagram showing a motor driving apparatus with a converter device according to the present invention;
Fig. 16 is a block diagram showing a motor driving apparatus with a converter device according to the present invention;
Fig. 17 shows an appearance of a motor driving module with a converter device according to the present invention; and
Fig. 18 is a view showing a refrigerating apparatus with a converter device according to the present invention.

### DESCRIPTION OF THE INVENTION

Hereafter, the embodiments of the present invention will be described with reference to the appended drawings.

### (Device Arrangement)

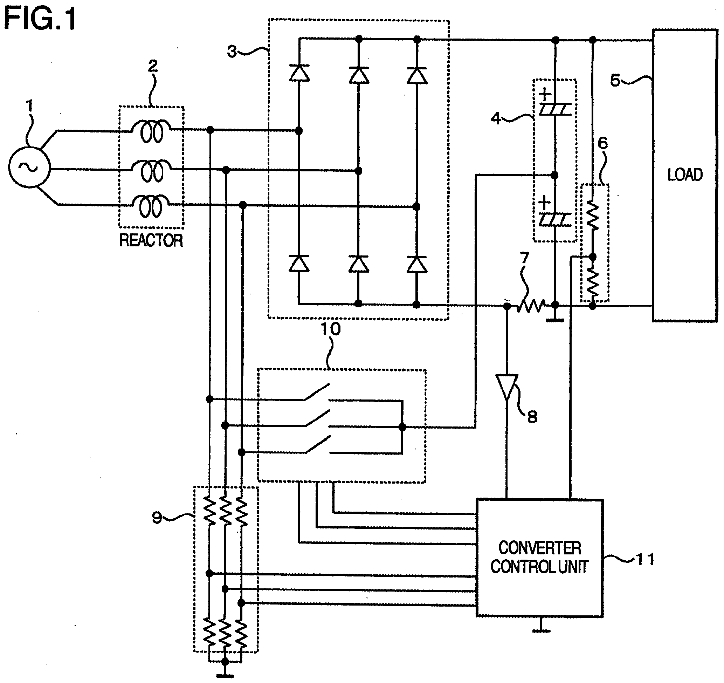

Fig. 1 is a block diagram showing a converter device according to a first embodiment of the present invention.

The converter device includes a three-phase AC reactor 2 connected with a three-phase AC power supply 1, a three-phase diode bridge 3, a plurality of smoothing capacitors 4 connected in series with each other and located on the DC side of the diode bridge 3, a resistor divider 6 for detecting a DC voltage, a combination of three bidirectional switches 10 and a resistor divider 9 connected with the input side of the three-phase diode bridge 3, a current-detecting shunt resistor 7 located on an output DC bus line, an amplifier 8, and a control unit 11.

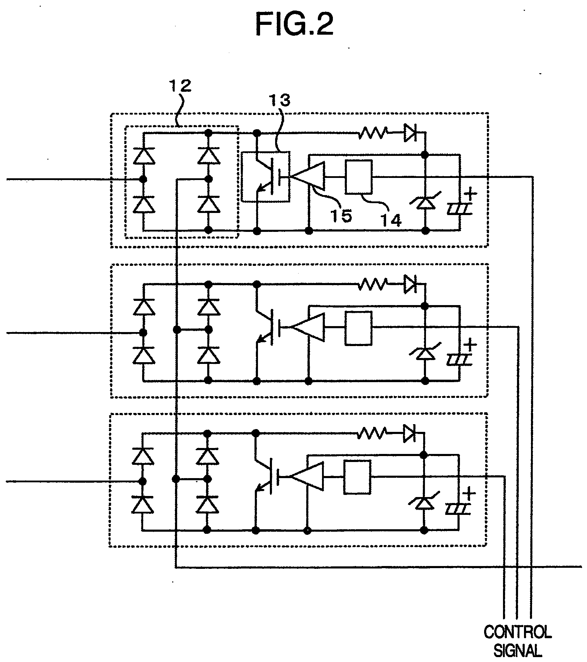

The smoothing capacitors 4 located on the DC side each have the same capacitance and are connected in series with each other so that those capacitors 4 create a neutral point of a DC voltage. The three bidirectional switches 10 are connected between the input side of the three-phase diode bridge and the neutral point of the smoothing capacitors. The bidirectional switches may be composed of a single-phase diode bridge 12 and one semiconductor power element 13 (MOSFET and IGBT element) as will be shown later in Fig. 2.

### (Driving Circuit)

Fig. 2 shows a detailed arrangement of the bidirectional current passage power element 10. In driving the semiconductor power elements, as shown in Fig. 2, to electrically insulate these elements from the control unit 11, those elements are connected with a driving circuit 15 through an insulating means 14 such as a photocoupler or a transformer. Further, when the semiconductor power element is composed of a MOSFET or an IGBT element, the power consumption of the driving circuit becomes lower. Hence, by causing a step-down transformer arranged in a simple manner as shown in Fig. 2 to supply direct current from the DC side of the single-phase diode bridge to the driving circuit, the driving circuit is made less costly. Instead, to evade loss appearing in the resistor driver, a DC-DC converter may be used as a power supply of the driving circuit.

### (Control Configuration)

The control unit 11 is arranged to have a semiconductor operating element such as a microcomputer or a digital signal processor so that the element processes a signal detected by the resistor dividers 6, 9 and a shunt resistor 7 so as to generate an on/off control signal of each semiconductor power element.

### (Control Block)

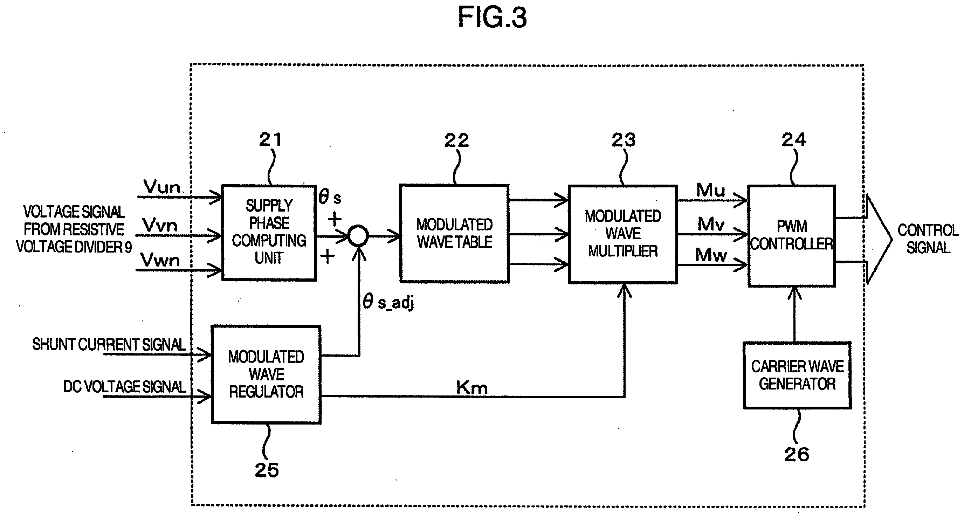

Fig. 3 is a functional block diagram showing the control unit 11. These functional blocks are realized by a program run on the microcomputer.

The supply phase computing unit 21 processes the voltage signals Vun, Vvn and Vwn obtained by the resistor divider 9 so as to divide a supply phase θs. Then, the three-phase modulated wave is generated from the supply phase θs by referring to the table predetermined in the microcomputer.

Next, the amplitude and the forward and backward positions of the modulated wave are adjusted by using the shunt current signal detected by the shunt resistor 7 and the amplifier 8 and the DC voltage detected by the resistor divider 6.

Lastly, a PWM controller 24 operates to output a PWM (Pulse Width Modulation) control signal based on the comparison between the adjusted modulated waves Mu, Mv and Mw and carrier waves (rectangular waves or sawtooth waves) so as to control the semiconductor power element 13 on and off through the PWM control signal.

### (Phase Detection)

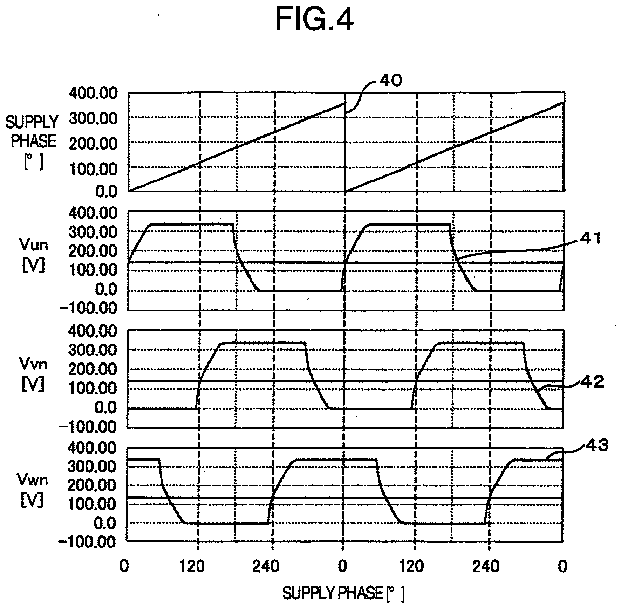

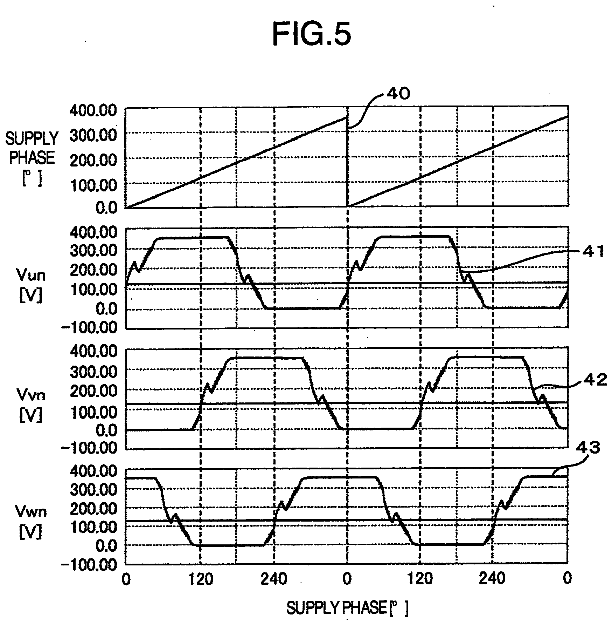

Figs. 4 and 5 show the voltage signals 41, 42, 43 and the supply phase 40 before the PWM (at diode-rectifying mode) and those obtained from the resistor divider 9 after the PWM. It is understood from those waveforms that the rising edges of the voltage signals detected by the resistor divider 9 substantially coincide with 0°, 120° and 240° of the supply phase as compared with the voltage level value that is equal to about a quarter or one third of a voltage amplitude value. Hence, the supply phase can be estimated from those voltage signals. Further, the supply frequency can be calculated from the time difference between the adjacent rising edges as well. Moreover, the phase sequence can be also determined on the sequence of the rising edges.

Further, by operating amplitude values or an average value of the voltage signals, it is also possible to estimate a magnitude of a supply voltage.

Later, the description will be oriented to the process of computing the supply phase through the use of the voltage signals 41, 42 and 43 detected by the resistor divider 9.

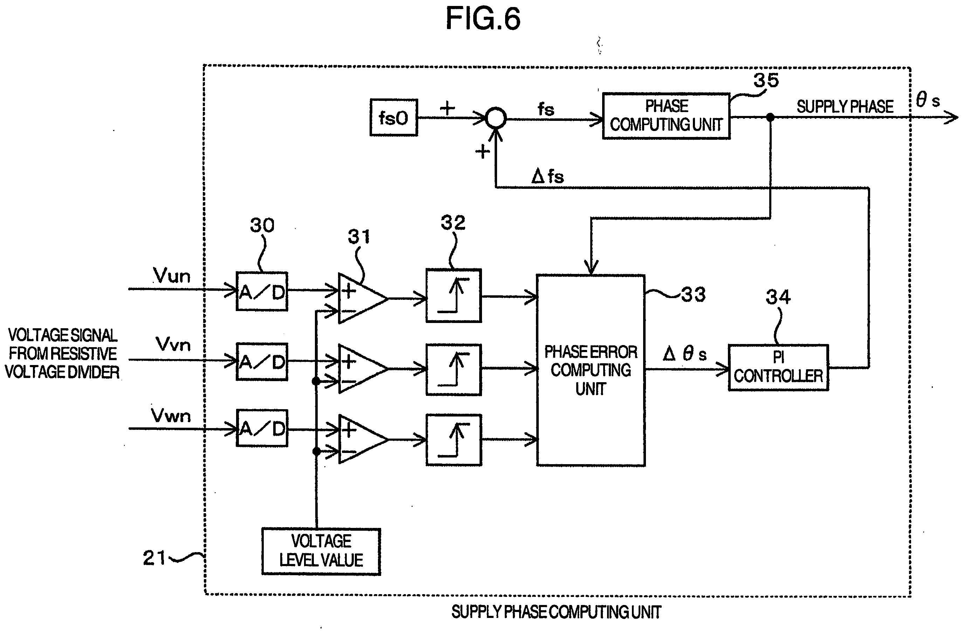

In order to improve the phase detecting accuracy, an error Δfs of the supply frequency is operated through the use of the PLL (Phase-locked Loop) and an error of the supply frequency fs0 inside the microcomputer is automatically corrected on the error Δfs. Fig. 6 shows the process to be executed by the supply phase operator 21.

As shown in Fig. 6, the supply phase operator 21 executes the process of creating a rising edge on the comparison between each voltage detected value and the voltage level value, deriving an error between the supply phase corresponding value (U phase: 0°, V phase: 120°, W phase: 240°) appearing when the rising edge is detected and the supply phase operated inside the microcomputer, and calculating the frequency error Δfs through the use of a PI controller. The frequency error is added to the supply frequency initial set value fs0 and integrated into an internal supply phase. However, if the phase sequence and the frequency of the power supply are not preset, before detecting the phase, it is necessary to determine the phase sequence and the frequency of the power supply based on the time difference and the sequence of the rising edges corresponding with the phases respectively.

The voltage level value may be pre-set to a fixed value (corresponding to about a quarter to one third of a voltage amplitude value between the phases) according to the supply voltage. However, to lessen the adverse effect of the supply voltage variation, by adjusting the voltage level value online according to a magnitude of a supply voltage estimated on the voltage signal detected by the resistor divider 9, it is possible to improve the phase detecting accuracy more.

As set forth above, since the error of the supply frequency can be automatically adjusted through the use of the PLL, if the variation of the supply frequency or the error of an oscillator of the microcomputer takes place, the supply phase detection error is suppressed.

If the microcomputer does not have a sufficient number of analog-to-digital converters, the use of the voltage signal of one or two phases makes it possible to calculate a supply phase through the same process. If, however, the one-phase voltage signal is used therefor, the phase sequence of the three-phase power supply cannot be detected.

The foregoing means and arrangement make it possible to detect the supply information required for the control through the use of the resistor divider only. This leads to reducing the cost of the overall circuit and improving the control performance. Further, when the present invention is applied to a globally available product, the supply information such as a supply frequency, a phase sequence and a supply voltage of each area is not required to be preset, so that the device is improved in light of general versatility and reliability.

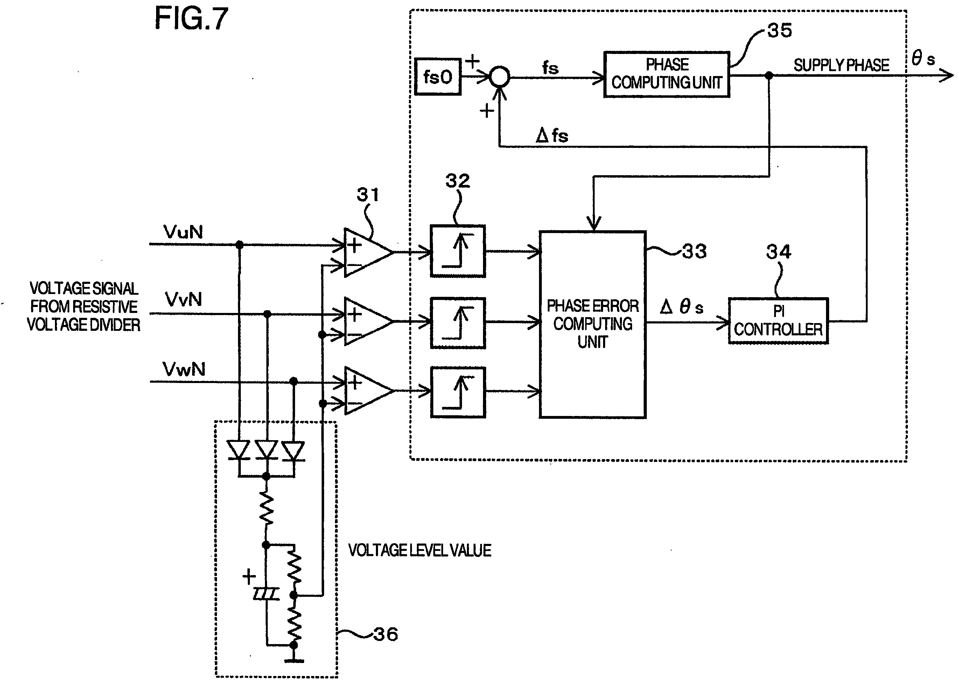

Fig. 7 is a block diagram showing a process of detecting a phase based on the comparison between a voltage signal detected by the resistor divider 9 and a divided voltage obtained by a resistor divider 36 through the use of an analog comparator connected outside in place of the analog-to-digital converter located inside the microcomputer. This arrangement does not use the analog-to-digital converter so that the data processing to be executed inside the microcomputer is simple. It means that the use of a low-functioning but inexpensive microcomputer is made possible.

### (PWM Control)

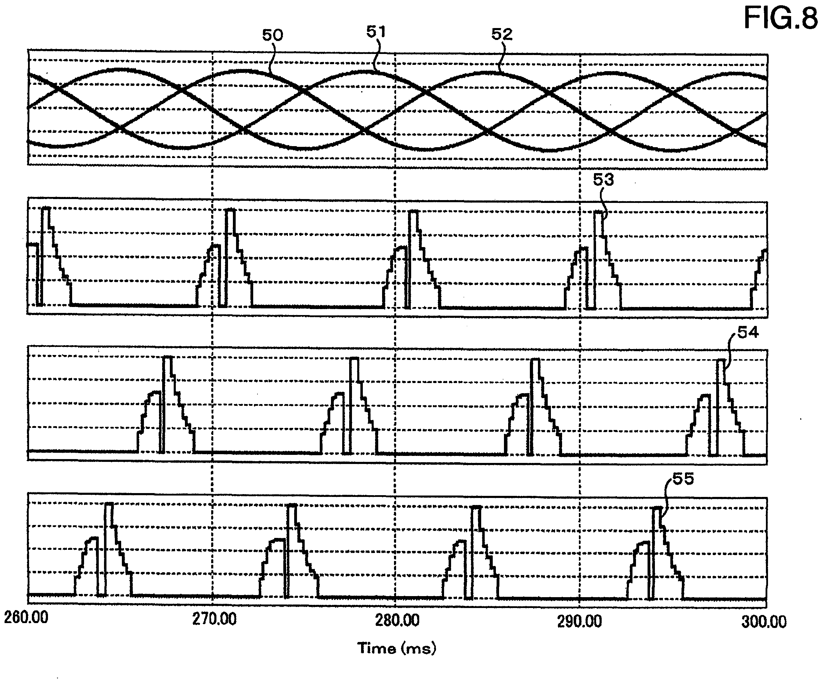

Fig. 8 shows the supply voltage waveforms 50, 51, 52 and three-phase harmonic table waveforms 53, 54, 55 pre-loaded in a memory built in the microcomputer. The harmonic table is created in advance in the predetermined condition by simulation or actual equipment experiments. The harmonic for each phase is provided in the interval near a zero cross of the source current of each phase. Further, to positively return the source current of each phase to zero, in the forward and the backward of the zero cross of the presumed source current, a PWM resting time (when the harmonic becomes zero) is placed. This interval may be in the range of about 5° to 10°.

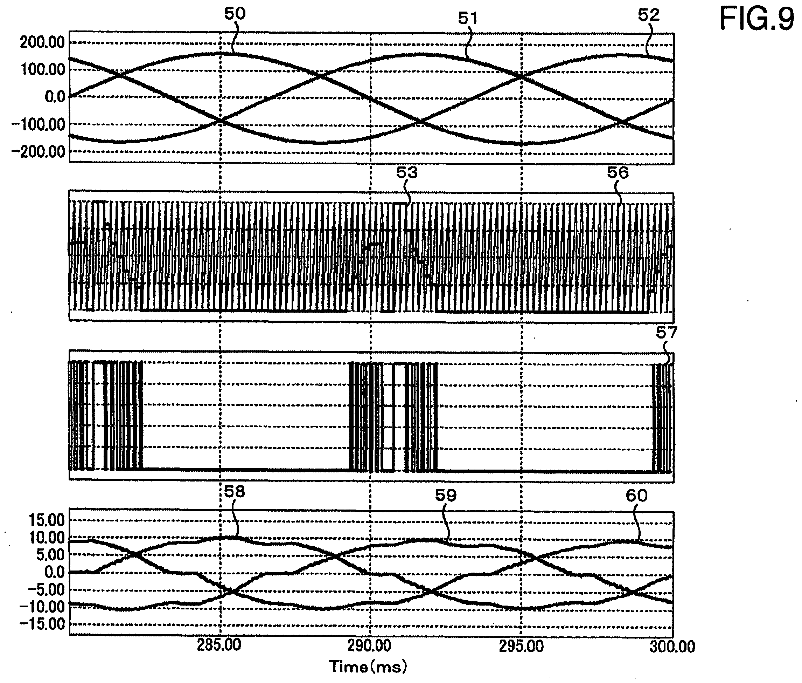

Fig. 9 shows the supply voltage waveforms 50, 51, 52, the harmonic 53 for the U phase, a carrier waveform 56, a PWM control signal 57 for the U phase, and source current waveforms 58, 59, 60. To reduce the reactor in size and suppress the current ripple, the frequency of the carrier wave is set to be high (several thousands to tens of thousands Hz).

Since the bidirectional current passage element for the U phase is pulse-width-modulated around the zero cross of the U-phase current, the interrupted interval of the diode-rectified current is made shorter than the conventional interval and thereby the current distortion is improved. Further, by adjusting the width of the PWM control signal through the use of the harmonic, it is possible to reduce the harmonic and improve a phase factor even if a small reactor is used.

Further, by fine adjusting a magnitude and a position of the harmonic of each phase according to the load condition during the drive, it is also possible to reduce the current harmonics on the overall area.

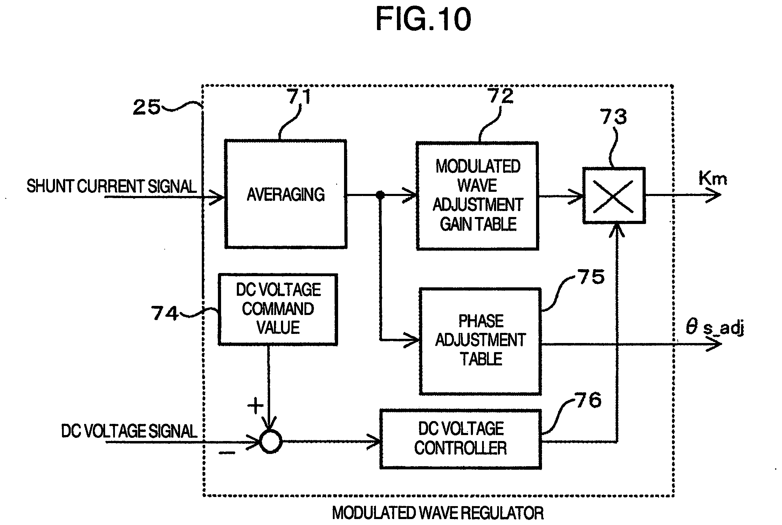

Fig. 10 shows one exemplary process for adjusting a magnitude and a forward and a backward positions of the harmonic through the use of the bus line current detected by the shunt resistor. At first, to calculate an average current component, the bus line current signal is averaged and filtered. Then, a modulated wave adjustment gain Km and a phase adjustment θs_adj are calculated from the average current component through the use of the preset modulated wave adjustment gain table 72 and the phase adjustment table 75. Lastly, as shown in Fig. 3, by multiplying the modulated wave adjustment gain Km with each phase modulated wave selected from the modulated wave table, it is possible to adjust a magnitude of the modulated wave. The adjustment of the forward and the backward positions of the modulated wave can be simply realized by adding the phase adjustment θs_adj to the calculated supply phase value inside the microcomputer.

### (DC Voltage Control)

As shown in Fig. 10, by calculating a difference between the DC voltage signal detected by the resistor divider and a DC voltage command value and re-adjusting the harmonic adjustment gain based on the difference through the use of a DC voltage controller (P controller or PI controller), it is possible to adjust the DC voltage to be larger than the diode-rectified DC voltage (in the range of about +20%). In the special application, for example, if the supply voltage is made far lower or if the motor for driving the inverter has a high rotation speed, this control makes it possible to keep the DC voltage. This leads to improving the reliability of the product and expanding the motor speed range.

### (Voltage and Current of Semiconductor Element)

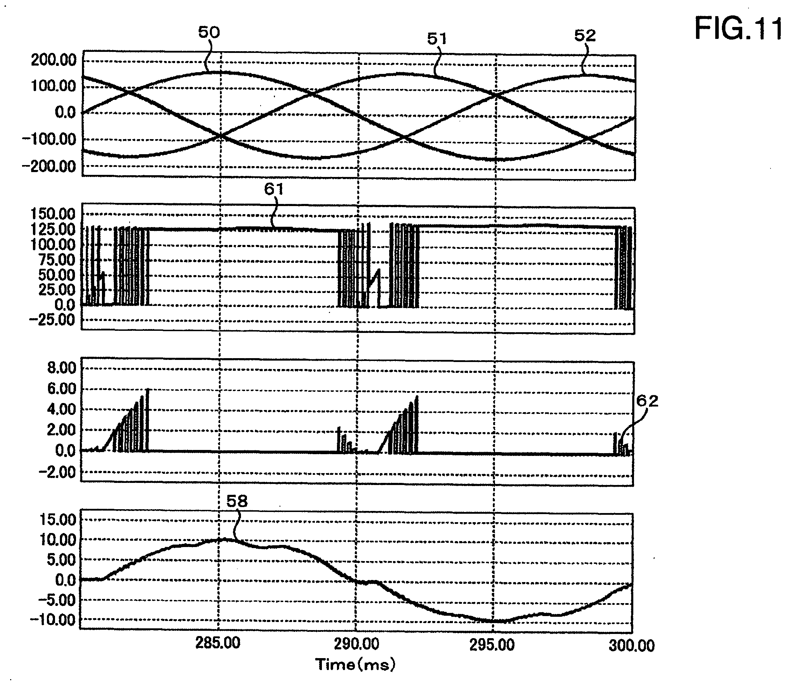

Fig. 11 shows the supply voltage waveforms 50, 51, 52, a voltage 61 to be applied onto the semiconductor power element composing the bidirectional current passage element, a current 62 flowing through the semiconductor power element, and a source current waveform 58. It is understood from these waveforms that the supply voltage is 200 V, while the DC voltage to be applied onto the semiconductor power element is 150 V or less and the current flowing through the bidirectional current passage element is about two thirds of the source current peak value or less. This means that the use of the semiconductor power element whose rated current and voltage are small is made possible. Further, the operating time of each semiconductor power element is one third or less, so that the switching loss is small.

As set forth above, the present invention realizes the converter device that enables to reduce the harmonics of the source current if a small reactor and the semiconductor power element with a small rated capacitance are used for making the converter device. Hence, the present invention makes great contribution to reducing the cost and the bulk of the resulting product and improving the efficiency thereof.

### (Soft Start)

To evade excess current and voltage, when the converter device is started, the modulated wave is made gradually larger from zero.

As a concrete process, when the converter device is started, the modulated wave adjustment gain Km is made gradually larger from zero. This process makes the variation of the DC voltage appearing when started gradual, thereby being able to lessen the adverse effect onto the DC load (such as a motor driving inverter).

### (Start Determination)

When the DC load is light, the converter device of the present invention is not pulse-width-modulated, since the harmonic components of the source current are small, the harmonic regulations can be satisfied. In actual, whether or not the PWM is to be executed in the converter device is determined by detecting the current on the DC side in the operation of the diode rectification through the use of the shunt resistor 7 and the amplifier 8, taking out the DC components through the effect of a low-pass filter or an averaging process of a certain length of time executed by the operation (not shown) inside the converter control unit 11 and comparing the DC components with the predetermined value. If the DC components are larger than the predetermined value, the PWM of the converter is started. Conversely, if the DC components of the detected current on the DC side is equal to or less than the DC components while the converter is operating the PWM, the PWM is stopped.

The foregoing description has concerned with the arrangement and the control of the three-phase converter device according to an embodiment of the present invention.

In order to lower the cost of the product, the foregoing embodiment has used the system of detecting current and voltage information through the use of the shunt resistor or the resistor driver. Instead of these resistors, current or voltage sensor may be used.

As another means for improving the source current harmonics, it is possible to add the arrangement shown in Fig. 1 except the three-phase diode bridge 3 to the existing three-phase diode rectifier.

### (Description of Simulated Result)

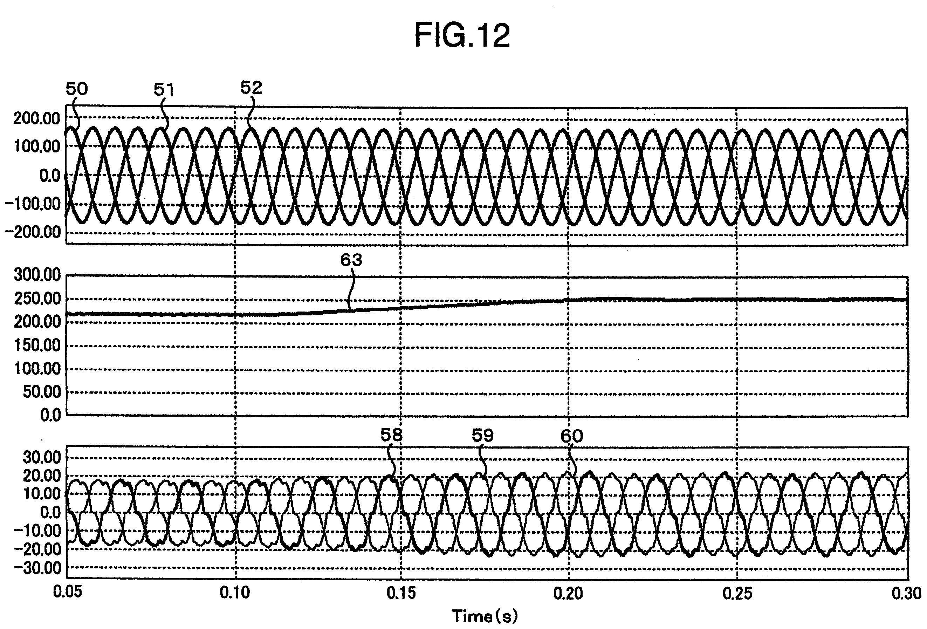

Figs. 12 to 14 shows the simulated result for making sure of the performance of the three-phase converter device.

Fig. 12 shows the supply voltages 50 to 52, the dc voltage 63, and the source currents 58 to 60 appearing when the converter device of the invention is started. It is confirmed that after the PWM control is started (on a time axis of 0.1s or later), the source current distortion is made smaller and the DC voltage is made higher by 15%. Further, since the modulated wave is gradually made larger after started, the abrupt variations of the DC voltage and the source current are suppressed.

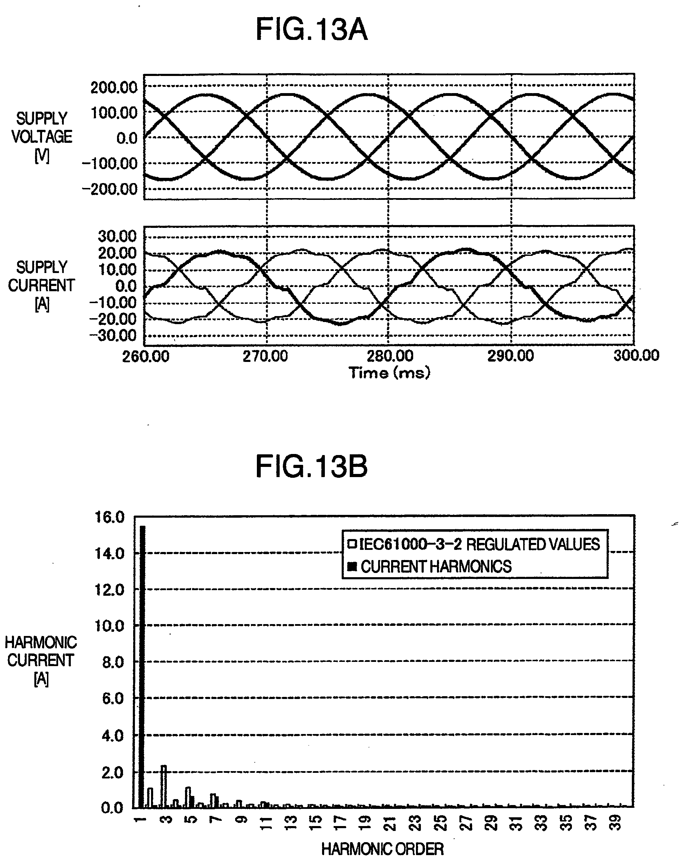

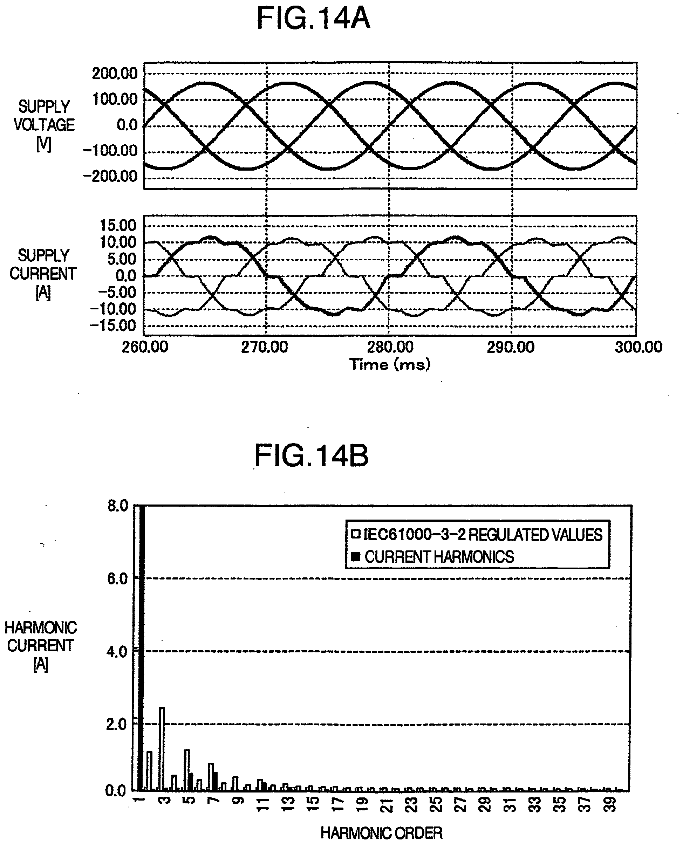

Fig. 13A shows a supply voltage waveform and a source current waveform appearing when the DC load is 5 kW. Fig. 13B shows the analyzed result of the current harmonic and the IEC61000-3-2 regulation values. It is confirmed from Figs. 13A and 14A that the second to the 40th current harmonic components are lower than the regulation values.

Fig. 14A shows the current appearing when the DC load is 2.5 kW and Fig. 14B shows the analyzed result of the harmonic. It is confirmed from Figs. 14A and 14B that if the load is greatly varied due to the adjustment of the harmonic, the current harmonic components are kept lower than the regulation values.

The foregoing results clearly show the effect of the present invention.

### (Device Arrangement)

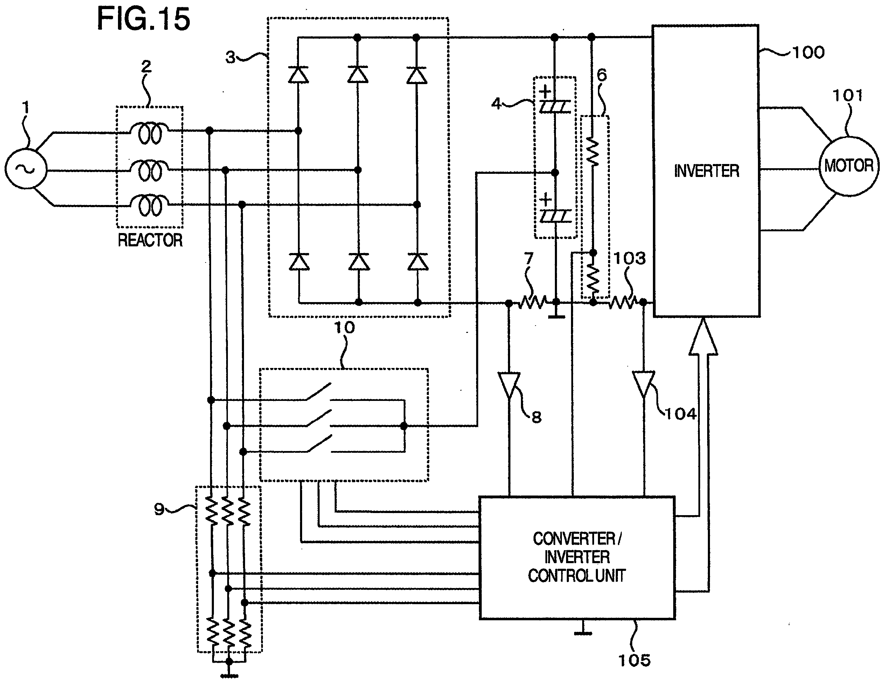

Fig. 15 shows the arrangement of the motor driving apparatus with a converter device according to the present invention.

The converter portion for converting three-phase alternating current into direct current is the same as that shown in Fig. 1. A three-phase inverter 100 is located on the DC output side of the converter circuit so as to cause a motor 101 to be driven.

A microcomputer is used as a control unit 105 for the converter and the inverter. The output current of the inverter is detected through the shunt resistor 103 and the amplifier 104 and then is processed in the control unit 105. The processed signal is used for controlling the motor 101.

This kind of arrangement makes it possible to share the substrate and the control microcomputer, thereby being able to reduce the cost and the bulk of the overall product. Further, since the load of the motor can be estimated on the output current and the voltage information of the inverter, this arrangement can be realized without having to detect a bus line current of the converter.

### (Device Arrangement)

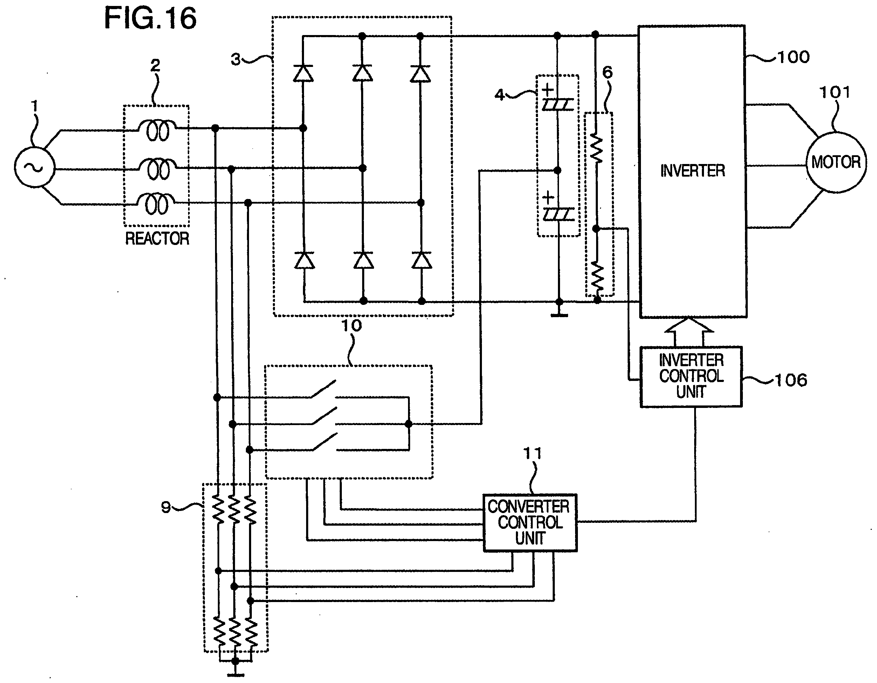

Fig. 16 shows the arrangement of a motor control device with a converter device according to the invention.

The different respect of this application from the application described before is a separation of a converter controller from an inverter controller. The motor load information is transmitted from the inverter to the converter controller through some means such as a communication path. The converter controller operates to adjust a magnitude and a position of the modulated wave based on the load information.

This kind of arrangement makes it possible to manufacture or install the converter circuit and the inverter circuit in respective places. This thus makes the design and the manufacture of the product more flexible.

### (Module Disposition)

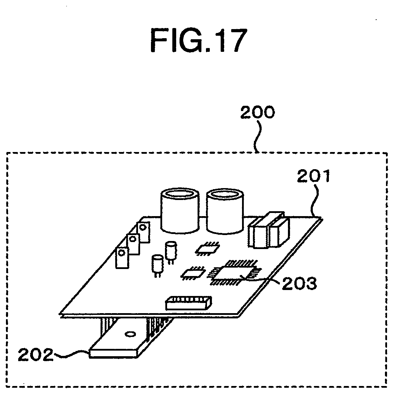

Fig. 17 shows an outer appearance of a motor driving module 200 with a converter device according to the present invention. It is one form of the resulting product.

The module 200 is a motor driving module composed of a control substrate and a semiconductor power element 202 mounted thereon. The control substrate 201 includes the voltage and current detecting circuit and the controller shown in Fig. 15 packaged thereon. The modularization makes it possible to reduce the overall apparatus in size and cost. The term "module" means a "regulated component unit" and is composed of hardware/software components to be separated from each other. Further, from a manufacturing point of view, it is preferable to mount those components on one substrate. However, it is not limited to one substrate. Those components may be mounted on two or more substrates.

This application makes it possible to reduce the cost and the bulk of the overall product. Hence, the motor driving apparatus constructed to use the module of this application is made more versatile and convenient.

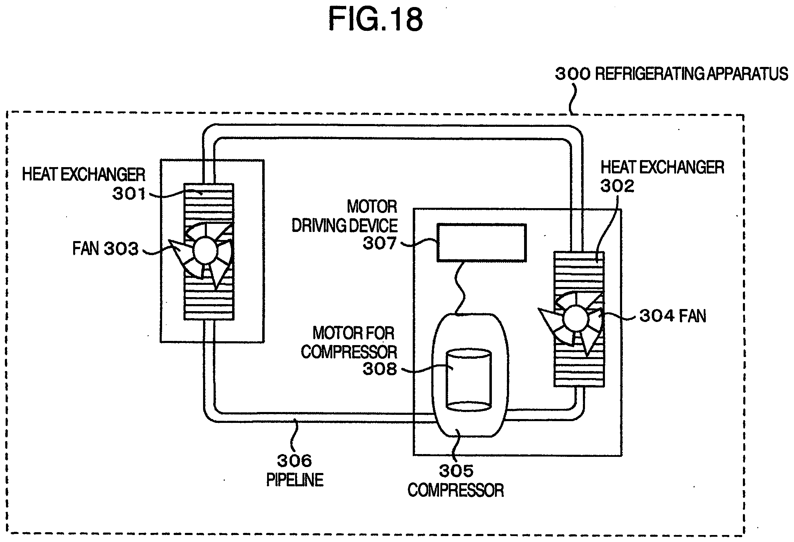

Fig. 18 shows a construction of a refrigerating apparatus such as an air-conditioner or a refrigerator in which a compression motor is driven by the motor driving module comprising a converter device according to the present invention.

The refrigerating apparatus 300 is an apparatus for conditioning the temperature and includes heat exchangers 301 and 302, fans 303 and 304, a compressor 305, a pipeline 306, and a motor driving device 307. As a motor for driving the compressor 305 is used a permanent-magnetic motor or a three-phase induction motor, which is located inside the compressor 305. The motor driving device 307 operates to convert AC supply power into direct current and feed the direct current to the motor driving inverter so that the inverter is caused to drive the motor.

The use of a converter and inverter module according to the present invention makes it possible to reduce the harmonic of the source current and to improve a phase factor thereof, thereby being able to the harmonic regulations. Further, since the DC voltage is raised by about 15% as compared with the diode rectifier, the performance at the high speed region improved. This thus makes it possible to expand the output range of the air-conditioner and the refrigerator.

## Claims

1. A converter device for converting three-phase alternating current into direct current, comprising:
- a three-phase AC reactor (2) configured to be connected with a three-phase AC power supply (1);
- a three-phase diode bridge (3) connected to the three-phase AC reactor (2);
- a plurality of smoothing capacitors (4) connected in series with each other across the DC side of the three-phase diode bridge (3), one of the capacitors being grounded at its minus terminal;
- three bidirectional switches (10) connected between an AC side of the three-phase diode bridge (3) and a midpoint of the smoothing capacitors connected in series with each other;
**characterized in that** a resistor divider (9) is connected between a contact connecting the three-phase AC reactor (2) and the three-phase diode bridge (3) and the minus terminal of the grounded smoothing capacitor (4), and
a control unit (11) configured to control the three bidirectional switches and to estimate at least one of a supply phase, a supply phase sequence, a supply frequency and a supply voltage by using a voltage signal detected by the resistor divider (9) so as to control a width of an on/off control signal of the bidirectional switch based on the estimated information so as to reduce harmonic components of the three-phase alternating current.

2. The converter device as claimed in claim 1, wherein the control unit (11) is configured to control the bidirectional switches (10) on and off by the process of estimating the supply phase by the voltage signal detected by the resistor divider (9) means, generate a modulated wave from the estimated phase by referring to a predetermined modulated wave table (22), compare the modulated wave with a carrier wave (56), and generate the on/off control signal of the bidirectional switches (10) based on the compared result.

3. The converter device as claimed in claim 2, wherein the control unit (11) is configured to adjust the modulated wave table (22) so that the on/off control signal of the bidirectional switches (10) is made to be a longer pulse immediately after a zero cross point of a voltage or current of the AC power supply (1) and then to be a narrower pulse, and thereby the interrupted interval of the source 81-69489EP-CM/Kf current is made shorter and accordingly the harmonic components of the source current are reduced.

4. The converter device as claimed in any one of claims 1 or 2, wherein the control unit (11) is configured to execute the process for estimating the supply phase by comparing the voltage signal detected by the voltage detecting means with a predetermined voltage value.

5. The converter device as claimed in claim 4, wherein the control unit (11) is configured to adjust the predetermined voltage value into about a quarter to one third of an amplitude value of the voltage signal detected by the resistor divider (9) by referring to the amplitude value or an average value of the voltage signal.

6. The converter device as claimed in any one of claims 1 or 2, wherein the control unit (11) is configured to control the bidirectional switches (10) on and off by the process of adjusting a magnitude and a forward and a backward positions of the modulated wave by using load information of the DC load or a current signal detected on a DC bus line and then to adjust the on/off control signal of the bidirectional switches (10) according to DC load variation.

7. The converter device as claimed in claim 1, wherein to return the source current into zero, in the on/off control signal of the bidirectional switches (10), the control unit (11) is configured to set a resting interval in the forward and backward of the zero cross point of the supply voltage or current of each phase.

8. The converter device as claimed in claim 1, wherein the bidirectional switch (10) is composed of a single-phase diode bridge (12) and a semiconductor power element (13) connected with a DC side of the diode bridge, and the DC voltage on the DC side of the diode bridge is supplied as a DC power supply for a driving circuit (15) of the semiconductor power element through the use of the resistor driver (9) and a capacitor or a DC/DC converter.

9. The converter device as claimed in claim 1 or 6, wherein if the load is determined to be more than a predetermined value by using the load of DC load or a current signal detected on a dc bus line, the on/off control signal of the bidirectional switches (10) is outputted, while if the load is determined to be equal to or less than the predetermined value, the on/off control signal thereof is stopped.

10. The converter device as claimed in claim 1, wherein to evade excess current and voltage when started, the control unit (11) is configured to make the on/off control signal of the bidirectional switches (10) wider by degrees.

## Patentansprüche

1. Wandlervorrichtung zum Wandeln eines Dreiphasen-Wechselstroms in Gleichstrom mit:
- einer Dreiphasen-Wechselstromdrossel (2), die ausgelegt ist, um mit einer Dreiphasen-Wechselstromversorgung (1) verbunden zu werden,
- einer Dreiphasen-Diodenbrücke (3), die mit der Dreiphasen-Wechselstromdrossel (2) verbunden ist,
- einer Mehrzahl von Glättungskondensatoren (4), die in Reihe zueinander über der Gleichstromseite der Dreiphasen-Diodenbrücke (3) verbunden sind, wobei einer der Kondensatoren an seinem Minuspol geerdet ist,
- drei bidirektionale Schalter (10), die zwischen einer Wechselstromseite der Dreiphasen-Diodenbrücke (3) und einem Mittelpunkt der Glättungskondensatoren, die in Reihe zueinander geschaltet sind, angeordnet sind,
**dadurch gekennzeichnet, dass** ein Widerstandsteiler (9) zwischen einen Kontakt, der die Dreiphasen-Wechselstromdrossel (2) und die Dreiphasen-Diodenbrücke (3) verbindet, und den Minuspol des geerdeten Glättungskondensators (4) geschaltet ist, und
eine Steuereinheit (11) vorgesehen ist, die ausgelegt ist, um die drei bidirektionalen Schalter zu steuern und um mindestens eine von einer Versorgungsphase, einer Versorgungsphasensequenz, einer Versorgungsfrequenz und einer Versorgungsspannung abzuschätzen unter Verwendung eines Spannungssignals, das von dem Widerstandsteiler (9) erfasst wird, um die Breite eines An-/Aus-Steuersignals des bidirektionalen Schalters zu steuern, auf der Grundlage der geschätzten Information, um die harmonischen Komponenten des Dreiphasen-Wechselstroms zu reduzieren.

2. Wandlervorrichtung nach Anspruch 1, wobei die Steuereinheit (11) ausgelegt ist, um die bidirektionalen Schalter (10) an- und auszuschalten durch das Verfahren des Abschätzens der Versorgungsphase durch das Spannungssignal, das von dem Widerstandsteiler (9) gemessen wird, eine modulierte Welle aus der abgeschätzten Phase zu generieren unter Bezugnahme auf eine vorbestimmte Tabelle (22) modulierter Wellen, die modulierte Welle mit einer Trägerwelle (56) zu vergleichen, und um das An-/Aus-Steuersignal der bidirektionalen Schalter (10) auf der Basis des Vergleichsergebnisses zu erzeugen.

3. Wandlervorrichtung nach Anspruch 2, wobei die Steuereinheit (11) ausgelegt ist, um die Tabelle (22) modulierter Wellen anzupassen, sodass das An-/Aus-Steuersignal der bidirektionalen Schalter (10) ein längerer Puls unmittelbar nach einem Nulldurchgangspunkt einer Spannung oder eines Stroms der Wechselstromversorgung (1) ist und dann ein schmalerer Puls ist, und dadurch das unterbrochene Intervall des Stromquellenstroms verkürzt wird, und entsprechend die harmonischen Komponenten des Stromquellenstroms reduziert werden.

4. Wandlervorrichtung nach einem der Ansprüche 1 oder 2, wobei die Steuereinheit (11) ausgelegt ist, um das Verfahren zum Abschätzen der Versorgungsphase auszuführen durch Vergleichen des von dem Spannungserfassungsmittel erfassten Spannungssignals mit einem vorbestimmten Spannungswert.

5. Wandlervorrichtung nach Anspruch 4, wobei die Steuereinheit (11) ausgelegt ist, um den vorbestimmten Spannungswert auf etwa ein Viertel bis zu einem Drittel eines Amplitudenwertes des von dem Widerstandsteiler (9) erfassten Spannungssignals zu justieren durch Bezug auf den Amplitudenwert oder auf einen Mittelwert des Spannungssignals.

6. Wandlervorrichtung nach einem der Ansprüche 1 oder 2, wobei die Steuereinheit (11) ausgelegt ist, um die bidirektionalen Schalter (10) an- und auszuschalten durch das Verfahren des Anpassens einer Größe und einer Vorwärts- und einer Rückwärtsstellung der modulierten Welle durch Verwendung einer Lastinformation der Gleichstromlast oder eines Stromsignals, das in einer Gleichstrombusleitung erfasst wird, und um dann das An-/Aus-Steuersignal für die bidirektionalen Schalter (10) entsprechend der Gleichstromlaständerung anzupassen.

7. Wandlervorrichtung nach Anspruch 1, wobei, um den Stromquellenstrom in dem An-/Aus-Steuersignal für die bidirektionalen Schalter (10) auf Null zurückzuführen, die Steuereinheit (11) ausgebildet ist, um ein verbleibendes Intervall vor und hinter dem Nulldurchgangspunkt der Versorgungsspannung oder des Versorgungsstroms einer jeden Phase festzulegen.

8. Wandlervorrichtung nach Anspruch 1, wobei der bidirektionale Schalter (10) zusammengesetzt ist aus einer Einphasendiodenbrücke (12) und einem Halbleiter-Leistungselement (13), das mit einer Gleichstromseite der Diodenbrücke verbunden ist, und wobei die Gleichspannung auf der Gleichstromseite der Diodenbrücke als eine Gleichstromversorgung für eine Treiberschaltung (15) des Halbleiterleistungselements durch die Verwendung des Widerstandsteilers (9) und eines Kondensators oder eines Gleichstrom/Gleichstrom-Wandlers bereitgestellt wird.

9. Wandlervorrichtung nach Anspruch 1 oder 6, wobei, wenn festgestellt wird, dass die Last größer als ein vorbestimmter Wert ist unter Verwendung der Last der Gleichstromlast oder eines Spannungssignals, das in einer Gleichstrombusleitung gemessen wird, das An-/Aus-Steuersignal der bidirektionalen Schalter (10) ausgegeben wird, während, wenn bestimmt wird, dass die Last kleiner oder gleich einem vorbestimmten Wert ist, deren An-/Aus-Steuersignal gestoppt wird.

10. Wandlervorrichtung nach Anspruch 1, wobei, um einen übermäßigen Strom und eine übermäßige Spannung beim Start zu vermeiden, die Steuereinheit (11) ausgelegt ist, um das An-/Aus-Steuersignal der bidirektionalen Schalter (10) um einige Grad zu erweitern.

## Revendications

1. Dispositif convertisseur pour convertir un courant alternatif triphasé en un courant continu, comprenant :
- un réacteur en CA triphasé (2) configuré pour être connecté avec une alimentation électrique en CA triphasé (1) ;
- un pont de diodes triphasé (3) connecté au réacteur en CA triphasé (2) ;
- une pluralité de condensateurs de lissage (4) connectés en série les uns avec les autres sur le côté CC du pont de diodes triphasé (3), un des condensateurs étant mis à la terre à sa borne moins ;
- trois commutateurs bidirectionnels (10) connectés entre un côté CA du pont de diodes triphasé (3) et un point médian des condensateurs de lissage connectés en série les uns avec les autres ;
**caractérisé en ce qu'**un diviseur à résistances (9) est connecté entre un contact connectant le réacteur en CA triphasé (2) et le pont de diodes triphasé (3) et la borne moins du condensateur de lissage (4) mis à la terre, et
une unité de commande (11) configurée pour commander les commutateurs bidirectionnels et pour estimer au moins une parmi une phase d'alimentation, une séquence de phases d'alimentation, une fréquence d'alimentation et une tension d'alimentation en utilisant un signal de tension détecté par le diviseur à résistances (9) de manière à commander une largeur d'un signal de commande marche/arrêt du commutateur bidirectionnel sur la base de l'information estimée de manière à réduire des composantes harmoniques du courant alternatif triphasé.

2. Dispositif convertisseur selon la revendication 1, dans lequel l'unité de commande (11) est configurée pour commander les commutateurs bidirectionnels (10) en marche/arrêt par le processus d'estimation de la phase d'alimentation par le signal de tension détecté par le moyen de diviseur à résistances (9), générer une onde modulée à partir de la phase estimée en se référant à une table d'ondes modulées (22) prédéterminée, comparer l'onde modulée avec une onde porteuse (56), et générer le signal de commande marche/arrêt des commutateurs bidirectionnels (10) sur la base du résultat comparé.

3. Dispositif convertisseur selon la revendication 2, dans lequel l'unité de commande (11) est configurée pour ajuster la table d'ondes modulées (22) de telle manière que le signal de commande marche/arrêt des commutateurs bidirectionnels (10) est fait pour être une impulsion plus longue immédiatement après un point de passage par le zéro d'une tension ou d'un courant de l'alimentation électrique en CA (1) et ensuite pour être une impulsion plus étroite, et ainsi l'intervalle interrompu du courant de source est fait plus court et en conséquence les composantes harmoniques du courant de source sont réduites.

4. Dispositif convertisseur selon l'une quelconque des revendications 1 ou 2, dans lequel l'unité de commande (11) est configurée pour exécuter le processus pour estimer la phase d'alimentation en comparant le signal de tension détecté par le moyen de détection de tension avec une valeur de tension prédéterminée.

5. Dispositif convertisseur selon la revendication 4, dans lequel l'unité de commande (11) est configurée pour ajuster la valeur de tension prédéterminée à environ un quart à un tiers d'une valeur d'amplitude du signal de tension détecté par le diviseur à résistances (9) en se référant à la valeur d'amplitude ou à une valeur moyenne du signal de tension.

6. Dispositif convertisseur selon l'une quelconque des revendications 1 ou 2, dans lequel l'unité de commande (11) est configurée pour commander les commutateurs bidirectionnels (10) en marche/arrêt par le processus d'ajustement d'une grandeur et d'une position en avant et d'une position en arrière de l'onde modulée en utilisant une information de charge de la charge CC ou un signal de courant détecté sur une ligne omnibus CC et ensuite pour ajuster le signal de commande marche/arrêt des commutateurs bidirectionnels (10) en fonction d'une variation de charge CC.

7. Dispositif convertisseur selon la revendication 1, dans lequel, pour ramener le courant de source à zéro, dans le signal de commande marche/arrêt des commutateurs bidirectionnels (10), l'unité de commande (11) est configurée pour fixer un intervalle de repos dans le mouvement vers l'avant et vers l'arrière du point de passage par le zéro de la tension ou du courant d'alimentation de chaque phase.

8. Dispositif convertisseur selon la revendication 1, dans lequel le commutateur bidirectionnel (10) est composé d'un pont de diodes monophasé (12) et d'un élément de puissance à semi-conducteurs (13) connecté avec un côté CC du pont de diodes, et la tension CC sur le côté CC du pont de diodes est alimentée comme une alimentation électrique CC pour un circuit de pilotage (15) de l'élément de puissance à semi-conducteurs par l'intermédiaire de l'utilisation du diviseur à résistances (9) et d'un condensateur ou d'un convertisseur CC/CC.

9. Dispositif convertisseur selon la revendication 1 ou 6, dans lequel, si la charge est déterminée être supérieure à une valeur prédéterminée en utilisant la charge de charge CC ou un signal de courant détecté sur une ligne omnibus CC, le signal de commande marche/arrêt des commutateurs bidirectionnels (10) est délivré en sortie, tandis que si la charge est déterminée être égale ou inférieure à la valeur prédéterminée, le signal de commande marche/arrêt de ceux-ci est stoppé.

10. Dispositif convertisseur selon la revendication 1, dans lequel, pour évacuer un courant et une tension en excès au démarrage, l'unité de commande (11) est configurée pour rendre le signal de commande marche/arrêt des commutateurs bidirectionnels (10) plus large par degrés.
